# EUROPEAN PATENT SPECIFICATION

(11) **EP 3 311 069 B1**
(45) Date of publication and mention of the grant of the patent: **26.07.2023**
(21) Application number: 16745819.9
(22) Date of filing: 16.06.2016
(51) Int. Cl.: F21V 23/04, G01J 3/02, F21W 131/405, F21Y 101/00

(54) **LIGHTING DEVICE, IN PARTICULAR FOR LIGHTING EXHIBITION OBJECTS**
BELEUCHTUNGSVORRICHTUNG, INSBESONDERE ZUR BELEUCHTUNG VON AUSSTELLUNGSOBJEKTEN
DISPOSITIF D'ÉCLAIRAGE, EN PARTICULIER POUR ÉCLAIRER DES OBJETS D'EXPOSITION

(30) Priority: 16.06.2015 IT UB20151430
(43) Date of publication of application: 25.04.2018
(73) Proprietor: Sklaer GmbH, 65817 Eppstein (DE)
(72) Inventor: MIRAS, Jean-Pierre, 65817 Eppstein (DE)
(74) Representative: Cernuzzi, Daniele
(86) International application number: PCT/IB2016/053581
(87) International publication number: WO 2016/203423

(56) References cited:
- WO-A1-02/099333
- WO-A1-02/099333
- WO-A1-2006/114725
- WO-A1-2008/023306
- WO-A1-2008/023306
- WO-A1-2011/027260
- WO-A1-2015/077038
- DE-A1-102005 043 627
- TW-U- M 488 825

## Description

### TECHNICAL FIELD

The present invention relates to a lighting device, in particular for lighting exhibition objects (such as works of art on display in a museum or gallery, but also articles displayed in commercial premises, etc.).

### BACKGROUND ART

In general, the lighting of any object on display in an environment is the result of natural light, which typically enters the environment from the windows, and artificial light emitted by lamps placed in the environment. The lighting of the object thus changes in intensity and colour spectrum, along with changes in natural lighting conditions. Accordingly, the quality of vision of the object by observers also changes, since the observers perceive different colours at different times.

The problem is relevant, for example, in museums or in any case in lighting works of art, but is present in general in all cases in which it is necessary to maintain the colours of the object as constant as possible as the lighting conditions change in the ambient in which the object is located. Lighting devices according to the prior art are described in patent documents WO02/099333A1, TWM488825U and WO2015/077038A1.

Changes in lighting conditions can indeed significantly affect the proper vision of a work of art by visitors and in general, even in commercial contexts, the correct appreciation of the qualities of a product.

Lighting control systems are known, in the museum sector, based on the use of sensors connected to the lamps lighting the exhibits.

In the known systems, the sensors detect the ambient light or the light directly emitted by the lamps; based on the values detected by the sensors, a control system changes the emission of the lamps to restore predetermined lighting conditions.

This kind of system is not fully satisfactory, mainly because it does not guarantee that the lighted object is the same colour despite varying ambient lighting conditions.

### DISCLOSURE OF INVENTION

The purpose of the present invention is to provide a lighting device, in particular for lighting exhibition objects, which overcomes the drawbacks of the prior art highlighted herein; in particular, the purpose of the invention is to provide a lighting device which makes it possible to maintain substantially constant the emission of the lighted object, i.e. to maintain the colours of the object constant despite varying lighting conditions of the surrounding environment.

The present invention therefore relates to a lighting device, in particular for lighting exhibition objects, as defined in essential terms in the appended claim 1 and, in its additional features, in the dependent claims.

The device according to the invention permits a highly accurate adjustment of the lighting conditions of an object.

In fact, the device according to the invention mainly detects the light emitted by the illuminated object as opposed to detecting the ambient light (which would otherwise be preponderant). This way, the device according to the invention detects with great accuracy the parameters defining the lighting conditions of the object and, in the event of deviations from a predetermined reference condition (due to the changing lighting conditions of the surrounding environment), calculates as a result how to vary the operating parameters of the lamp to restore optimal lighting conditions.

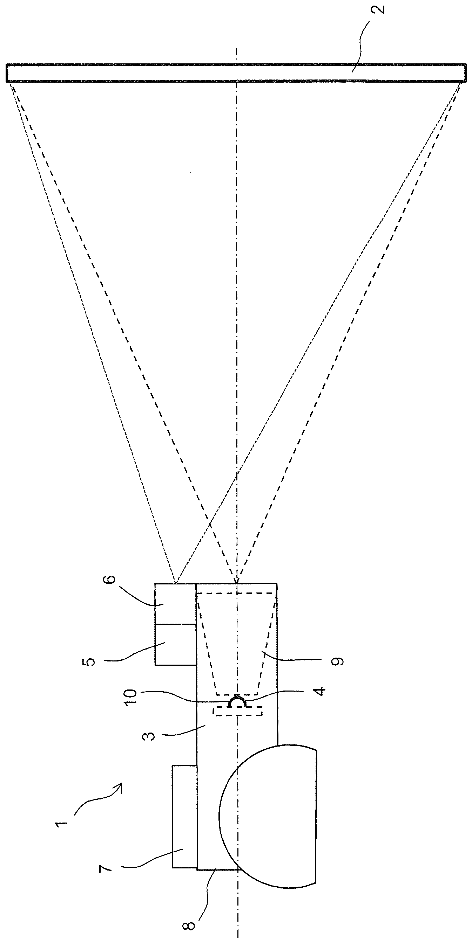

### BRIEF DESCRIPTION OF THE DRAWING

Further features and advantages of the present invention will be evident from the description below of a non-limiting embodiment with reference to the appended drawing which shows a schematic, out of scale view of a lighting device according to the invention, used in particular to light an exhibition object.

### BEST MODE FOR CARRYING OUT THE INVENTION

In the appended figure the lighting device, globally denoted by reference numeral 1, is used in particular to light an exhibition object 2, which in the non-limiting example shown, is a painting. It is understood that the device according to the invention can be used in other applications, not just to light objects and works of art exhibited in museums or galleries, but also articles displayed in commercial stores or in other environments.

The device 1 comprises: a lamp 3 having at least one LED light source 4 capable of varying the emission spectrum (in particular, chromatic components and/or colour temperature) and light intensity of the emitted light; a colour sensor 5, capable of detecting a trio of RGB values, and optionally a light intensity or luminance value; a restricting optical system 6 associated to the sensor 5; and a control unit 7 connected to the light source 4 and the sensor 5 for operating the lamp 3 and precisely the light source 4 depending on signals received from the sensor 5.

The lamp 3 has a lamp body 8 which supports the light source 4 and an optical unit 9 associated with the light source 4.

The light source 4 may include one or more LEDs 10; preferably, the light source 4 includes RGB LEDs, or in any case a system of LEDs with variable spectrum, i.e. with a variable colour emission in order to vary the chromatic components and/or colour temperature of the emitted light; moreover, preferably, the light intensity of the light emitted by the light source 4 is also variable.

The optical unit 9 is placed in front of the light source 4 to direct onto the object 2 the light beam emitted by the light source 4; optionally, the optical unit 9 is equipped with a device for adjusting the amplitude of the light beam emitted.

The sensor 5 is a colour sensor comprising at least one sensitive element of the RGB type, capable of providing a signal representative of the colour of the incident light radiation, in particular via a trio of RGB values; preferably, the sensor 5 is also able to detect the light intensity (via the same sensitive element of the RGB type, or a second sensitive element specific for light intensity) .

The sensor 5 may also be formed of an array of RGB sensitive elements which allow local measurements (and thus a colour mapping) instead of providing an average measurement.

In a preferred embodiment, but not necessarily, the sensor 5 is mounted integral with the lamp body 8, so as to be pointed directly onto said object 2 lighted by the lamp 3.

It is understood that the sensor 5 can also be mounted on a dedicated support, separate or separable from the lamp body 8, so as to be placed in a remote position with respect to the lamp body 8.

In any case, the sensor 5 is connected, in wireless or wired mode, to the control unit 7.

For simplicity, the connections between the various components of the device 1 are not illustrated in the figure, nor are the electrical power supply connections of the components.

The restricting optical system 6 is positioned in front of the sensor 5 to frame the object 2 or a part thereof to measure the light emission (i.e. the emitted light) by means of the sensor 5.

The optical system 6 is therefore configured so as to frame the object 2 (or a part thereof) and increase the ratio of the light reaching the sensor 5 from the object 2 (or the part thereof framed by the optical system 6) and the light that reaches the sensor 5 from the environment instead.

In particular, the optical system 6 is a mechanical optical system, formed by one or more optical elements shaped so as to limit the amount of ambient light arriving at the sensor 5 and to increase the ratio between the light coming directly from the object 2 (or part thereof framed by the optical system 6) and the ambient light.

An optical system 6 with adjustable focal distance, thus equipped with a focusing device (known) may be used: by acting on the focusing device the focal distance of the optical system 6 with respect to the sensor 5 (namely, with respect to the sensitive element of the sensor 5) for focusing the light coming from the object 2 to the sensor 5 (namely, on the sensitive element of the sensor 5) is adjusted.

Or, without the need for the focusing device, an optical system 6 configured so that only the incident light having an angle of incidence less than a predetermined limit angle (which passes through the optical system 6 and hits the sensitive element of the sensor 5) arrives at the sensor 5 may be used, while the incident light having an angle of incidence greater than said limit angle is shielded by the optical system 6 and does not reach the sensitive element of the sensor 5.

For example, the sensor 5 may be associated with a CPC (compound parabolic collector) element, or with other types of similar optical elements.

The control unit 7, for example supported by the lamp body 8, is connected to the light source 4 and to the sensor 5 to control the lamp 3, in particular by varying the chromatic components and/or light intensity of the light emitted by the lamp 3, depending on the signals received from the sensor 5, as described in greater detail below.

The functioning of the device 1 for lighting the object 2 is as follows.

The device 1 is installed in the environment (for example, in the room) in which the object 2 to be lighted is located, so that the light emitted by the lamp 3 at least partially lights the object 2 and the sensor 5 is in turn facing the object 2 and frames, by means of the optical system 6, the object 2 or a portion thereof illuminated by the lamp 3.

In a typical situation of use of the device 1, the object 2 is located in an environment in which natural light penetrates.

The object 2 (understood here and henceforth also as part of the object 2 illuminated by the lamp 3) is thus illuminated by the combination of the light coming from the lamp 3 and the ambient light; the ambient light is given by the natural light in the environment in which the object 2 is located and possibly by light coming from other artificial light sources present in the same environment.

The contribution of the object 2 to the total light present in the environment is generally modest, being decidedly prevailing, at least in most cases of practical interest, the ambient lighting.

The control unit 7 has at least one stored reference condition identified by initial parameters, for example by a trio of RGB values and, optionally, also by a light intensity value; the reference condition, set at time t0, is the desired lighting condition to be maintained on the object 2 illuminated by the lamp 3 and is identified by the parameters R0, G0, B0, I0.

In a subsequent instant t1, the sensor 5 detects the light emission of the object 2 illuminated by the lamp 3, i.e. by the light coming from the object 2 or part thereof framed by the sensor 5 via the optical system 6.

In particular, the sensor 5 detects the light emitted by the object 2 and the optical system 6 reduces the environmental contribution reaching the sensor 5, i.e. reduces the ambient light reaching the sensor 5, substantially increasing the ratio between the signal coming from the object 2 and the signal coming from the environment.

The optical system 6 thus shields at least part of the ambient light and focuses on the sensor 5 the light coming from the object 2.

The sensor 5 sends to the control unit 7 representative signals of the light emission of the object 2, shielded at least in part by the ambient light, and thus of a lighting condition identified by parameters at time t1; in particular, the sensor 5 sends to the control unit 7 a trio of RGB values, and a light intensity value: R1, G1, B1, I1.

The control unit 7 processes the signals received from the sensor 5 and calculates the deviations of each parameter detected from the reference condition.

If there are deviations from the reference condition, the control unit 7 calculates which variations of operating parameters of the lamp 3 are needed to restore the reference condition and accordingly controls the operation of the lamp 3, namely the light source 4, so that the lamp 3 provides RGB and light intensity parameters such as to return to the reference condition.

In other words, the control unit 7 calculates the variations of the operating parameters of the lamp 3 which cancel out the deviations from the reference condition.

Alternatively, the control unit 7 can be programmed so as not to restore, by acting on the operating parameters of the lamp 3, the reference condition, but to provide a new lighting condition, different from the reference condition.

In any case, the control unit 7 calculates the deviations needed to achieve the desired lighting condition starting from the lighting condition detected and controls the variations of the operating parameters of the lamp 3 needed to achieve the desired lighting condition.

In one variant, the device 1 comprises two sensors 5 (also understood as two groups of sensors) located in different positions on the lamp 3 or at different remote positions with respect to the lamp 3, to perform a differential measurement of the light emission of the object 2.

A first sensor 5, provided with the restricting optical system 6, detects the light emission of a first portion of the object 2; a second sensor 5, optionally in turn provided with a restricting optical system 6, detects the emission of a second portion of the object 2, or the ambient light.

The control unit 7 processes the signals of the two sensors 5 and determines how to intervene on the operating parameters of the lamp 3 based on the differential measurement of the two sensors 5.

Lastly, it is understood that further modifications and variations may be made to the lighting device described and illustrated herein while remaining within the scope of the appended claims.

## Claims

1. A lighting device (1), in particular for lighting an object (2) on exhibition, comprising a lamp (3) having at least one LED light source (4) capable of varying the emission spectrum and light intensity of the emitted light; a colour sensor (5), capable of detecting a trio of RGB values and optionally a light intensity or luminance value; and a control unit (7) connected to the light source (4) and to the sensor (5) for operating the lamp (3) and precisely the light source (4) depending on signals received from the sensor (5); wherein the light source (4) includes a set of variable spectrum LEDs (10) with variable chromatic emission to change the color components and/or the color temperature of the emitted light; wherein the sensor (5) is provided with a restricting optical system (6), positioned in front of the sensor (5) and configured so as to frame the object (2) or a part thereof, shield at least part of the ambient light and focus on the sensor (5) the light coming from the object (2), and increase the ratio between the light of the object (2) arriving at the sensor (5) from the object (2) or its part framed by the optical system (6), and the ambient light arriving at the sensor (5) from the environment surrounding the object (2).

2. A device according to claim 1, wherein the optical system (6) is a mechanical optical system, formed by one or more optical elements shaped so as to limit the amount of ambient light arriving at the sensor (5) and to increase the ratio between the light coming directly from the object (2) and the ambient light.

3. A device according to claim 1 or 2, wherein the optical system (6) is a focal distance adjustable optical system, provided with a focus device for adjusting the focal distance of the optical system (6) with respect to the sensor (5) and focus on the sensor (5) the light from the object (2).

4. A device according to claim 1 or 2, wherein the optical system (6) is configured so that the sensor (5) receives only the incident light having an incidence angle lower than a predetermined limit angle, while the incident light having an incidence angle greater than said limit angle is shielded by the optical system (6) .

5. A device according to one of the preceding claims, wherein the sensor (5) is a colour sensor comprising at least one RGB-type sensitive element, capable of providing signals representative of the colour of the incident luminous radiation by trios of RGB values.

6. A device according to one of the preceding claims, wherein the sensor (5) is capable of detecting the light intensity of the incident luminous radiation.

7. A device according to one of the preceding claims, wherein the sensor (5) comprises a sensitive RGB element providing an average measure; or comprises an array of sensitive RGB elements for performing local measurements and hence a color mapping.

8. A device according to one of the preceding claims, wherein the sensor (5) is integrally supported by a lamp body (8) of the lamp (3), so as to be pointed directly at the same object (2) lighted by the lamp (3); or the sensor (5) is mounted on a support separate or separable from the lamp body (8), so as to be positioned in a remote position with respect to the lamp (3).

9. A device according to one of the preceding claims, wherein the control unit (7) has a memory storing at least one reference condition identified by parameters; and wherein the control unit (7) is configured so as to: process signals received from the sensor (5) and representative of the light emission of the object (2); calculate the deviation of each parameter detected with respect to the reference condition; calculating variations of operating parameters of the lamp (3) required to restore the reference condition; controlling the operation of the lamp (3) and precisely of the light source (4) so that the lamp (3) provides RGB and light intensity parameters such as to restore the reference condition.

## Patentansprüche

1. Beleuchtungsvorrichtung (1), insbesondere zur Beleuchtung eines Ausstellungsobjekts (2), aufweisend:
eine Lampe (3) mit mindestens einer LED-Lichtquelle (4), die das Emissionsspektrum und die Lichtintensität des emittierten Lichts variieren kann;
einen Farbsensor (5), der in der Lage ist, ein Trio von RGB-Werten und optional einen Lichtintensitäts- oder Leuchtdichtewert zu detektieren; und
eine Steuereinheit (7), die mit der Lichtquelle (4) und dem Sensor (5) verbunden ist, um die Lampe (3) und genau die Lichtquelle (4) in Abhängigkeit von vom Sensor (5) empfangenen Signalen zu betreiben;
wobei die Lichtquelle (4) einen Satz von LEDs (10) mit variablem Spektrum und variabler chromatischer Emission enthält, um die Farbkomponenten und/oder die Farbtemperatur des emittierten Lichts zu ändern;
wobei der Sensor (5) mit einem begrenzenden optischen System (6) versehen ist, das vor dem Sensor (5) angeordnet und so konfiguriert ist zum Einrahmen des Objekts (2) oder eines Teils davon, zum Abschirmen zumindest eines Teils des Umgebungslichts und zum Fokussieren des von dem Objekt (2) kommenden Lichts auf den Sensor (5), und zum Erhöhen des Verhältnisses zwischen dem Licht des Objekts (2), das von dem Objekt (2) oder seinem durch das optische System (6) eingerahmten Teil am Sensor (5) ankommt, und dem Umgebungslicht, das von der das Objekt (2) umgebenden Umgebung am Sensor (5) ankommt.

2. Vorrichtung nach Anspruch 1, wobei das optische System (6) ein mechanisch-optisches System ist, das aus einem oder mehreren optischen Elementen besteht, die so geformt sind, dass sie die Menge des auf den Sensor (5) treffenden Umgebungslichts begrenzen und das Verhältnis zwischen dem direkt vom Objekt (2) kommenden Licht und dem Umgebungslicht erhöhen.

3. Vorrichtung nach Anspruch 1 oder 2, wobei das optische System (6) ein in der Brennweite einstellbares optisches System ist, das mit einer Fokussiereinrichtung versehen ist, um die Brennweite des optischen Systems (6) in Bezug auf den Sensor (5) einzustellen und das Licht des Objekts (2) auf den Sensor (5) zu fokussieren.

4. Vorrichtung nach Anspruch 1 oder 2, wobei das optische System (6) so konfiguriert ist, dass der Sensor (5) nur das einfallende Licht mit einem Einfallswinkel kleiner als ein vorbestimmter Grenzwinkel empfängt, während das einfallende Licht mit einem Einfallswinkel größer als der Grenzwinkel durch das optische System (6) abgeschirmt wird.

5. Vorrichtung nach einem der vorhergehenden Ansprüche, wobei der Sensor (5) ein Farbsensor ist, der mindestens ein empfindliches Element vom Typ RGB aufweist, das in der Lage ist, Signale zu liefern, die die Farbe der einfallenden Lichtstrahlung durch Trios von RGB-Werten darstellen.

6. Vorrichtung nach einem der vorhergehenden Ansprüche, wobei der Sensor (5) in der Lage ist, die Lichtstärke der einfallenden Lichtstrahlung zu erfassen.

7. Vorrichtung nach einem der vorangehenden Ansprüche, wobei der Sensor (5) ein empfindliches RGB-Element aufweist, das eine Durchschnittsmessung liefert, oder ein Array von empfindlichen RGB-Elementen zur Durchführung lokaler Messungen und damit einer Farbkartierung.

8. Vorrichtung nach einem der vorangehenden Ansprüche, wobei der Sensor (5) integral von einem Lampenkörper (8) der Lampe (3) getragen wird, so dass er direkt auf dasselbe Objekt (2) gerichtet ist, das von der Lampe (3) beleuchtet wird, oder der Sensor (5) auf einem Träger montiert ist, der von dem Lampenkörper (8) getrennt oder trennbar ist, so dass er in einer entfernten Position in Bezug auf die Lampe (3) positioniert werden kann.

9. Vorrichtung nach einem der vorhergehenden Ansprüche, wobei die Steuereinheit (7) einen Speicher aufweist, der mindestens eine durch Parameter identifizierte Referenzbedingung speichert; und wobei die Steuereinheit (7) konfiguriert ist zum: Verarbeiten von Signalen, die von dem Sensor (5) empfangen werden und für die Lichtemission des Objekts (2) repräsentativ sind, Berechnen der Abweichung jedes erfassten Parameters in Bezug auf die Referenzbedingung; Berechnen von Änderungen der Betriebsparameter der Lampe (3), die erforderlich sind, um die Referenzbedingung wiederherzustellen; Steuern des Betriebs der Lampe (3) und genau der Lichtquelle (4), so dass die Lampe (3) RGB- und Lichtintensitätsparameter liefert, um die Referenzbedingung wiederherzustellen.

## Revendications

1. Dispositif d'éclairage (1), en particulier pour éclairer un objet (2) en exposition, comprenant une lampe (3) ayant au moins une source lumineuse (4) DEL en mesure de faire varier le spectre d'émission et l'intensité lumineuse de la lumière émise ; un capteur (5) de couleur en mesure de détecter un trio de valeurs RVB et facultativement une valeur d'intensité lumineuse ou de luminance ; et une unité de commande (7) connectée à la source lumineuse (4) et au capteur (5) pour faire fonctionner la lampe (3) et précisément la source lumineuse (4), en fonction de signaux reçus du capteur(5) ; dans lequel la source lumineuse (4) comporte un jeu de DEL à spectre variable (10) avec une émission chromatique variable pour changer les composantes de couleur et/ou la température de couleur de la lumière émise ; dans lequel
le capteur (5) est pourvu d'un système optique (6) de restriction positionné devant le capteur (5), et configuré de manière à encadrer l'objet (2) ou une partie de celui-ci, à occulter au moins une partie de la lumière ambiante et à focaliser la lumière provenant de l'objet (2) sur le capteur (5), et à augmenter le rapport entre la lumière de l'objet (2) arrivant au capteur (5) à partir de l'objet (2) ou de sa partie encadrée par le système optique (6), et la lumière ambiante arrivant au capteur (5) à partir de l'environnement autour de l'objet (2).

2. Dispositif selon la revendication 1, dans lequel le système optique (6) est un système optique mécanique formé par un ou plusieurs éléments optiques façonnés de manière à limiter la quantité de lumière ambiante arrivant au capteur (5) et à augmenter le rapport entre la lumière provenant directement de l'objet (2) et la lumière ambiante.

3. Dispositif selon la revendication 1 ou 2, dans lequel le système optique (6) est un système optique à distance focale réglable pourvu d'un dispositif de focalisation pour régler la distance focale du système optique (6) par rapport au capteur (5) et focaliser la lumière provenant de l'objet (2) sur le capteur (5).

4. Dispositif selon la revendication 1 ou 2, dans lequel le système optique (6) est configuré de sorte que le capteur (5) ne reçoive que la lumière incidente ayant un angle d'incidence inférieur à un angle limite prédéterminé, tandis que la lumière incidente ayant un angle d'incidence supérieur audit angle limite est occultée par le système optique (6).

5. Dispositif selon l'une des revendications précédentes, dans lequel le capteur (5) est un capteur de couleur comprenant au moins un élément sensible de type RVB, en mesure de fournir des signaux représentatifs de la couleur du rayonnement lumineux incident par des trios de valeurs RVB.

6. Dispositif selon l'une des revendications précédentes, dans lequel le capteur (5) est en mesure de détecter l'intensité lumineuse du rayonnement lumineux incident.

7. Dispositif selon l'une des revendications précédentes, dans lequel le capteur (5) comprend un élément sensible RVB fournissant une mesure moyenne ; ou comprend un réseau d'éléments sensibles RVB pour réaliser des mesures locales et donc un mappage de couleurs.

8. Dispositif selon l'une des revendications précédentes, dans lequel le capteur (5) est supporté d'un seul tenant par un corps de lampe (8) de la lampe (3), de manière à être dirigé directement vers le même objet (2) éclairé par la lampe (3) ; ou le capteur (5) est monté sur un support séparé ou séparable du corps de lampe (8), de manière à être positionné dans une position à distance par rapport à la lampe (3).

9. Dispositif selon l'une des revendications précédentes, dans lequel l'unité de commande (7) a une mémoire stockant au moins une condition de référence identifiée par des paramètres ; et dans lequel l'unité de commande (7) est configurée de manière à : traiter des signaux reçus du capteur (5) et représentatifs de l'émission lumineuse de l'objet (2) ; calculer l'écart de chaque paramètre détecté par rapport à la condition de référence ; calculer les variations de paramètres de fonctionnement de la lampe (3) nécessaires pour rétablir la condition de référence ; commander le fonctionnement de la lampe (3) et précisément de la source lumineuse (4) de sorte que la lampe (3) fournisse des paramètres RVB et d'intensité lumineuse de manière à rétablir la condition de référence.
